**Europäisches Patentamt**

**European Patent Office**

**Office européen des brevets**

(11) Veröffentlichungsnummer: **0 147 830 B1**

(12) **EUROPÄISCHE PATENTSCHRIFT**

(45) Veröffentlichungstag der Patentschrift: **10.07.91**

(51) Int. Cl.⁵: **B23B 51/00**

(21) Anmeldenummer: **84116105.2**

(22) Anmeldetag: **21.12.84**

(54) **Bohrer für Handbohrmaschinen.**

(30) Priorität: **27.12.83 DE 8337365 U**
**10.04.84 DE 3413432**

(43) Veröffentlichungstag der Anmeldung:
**10.07.85 Patentblatt 85/28**

(45) Bekanntmachung des Hinweises auf die
Patenterteilung:
**10.07.91 Patentblatt 91/28**

(84) Benannte Vertragsstaaten:
**CH DE FR GB IT LI**

(56) Entgegenhaltungen:
**CH-A- 283 139**
**CH-A- 500 054**
**DE-A- 2 454 261**
**FR-A- 2 218 169**
**GB-A- 2 103 988**

(73) Patentinhaber: **GEBRÜDER HELLER GMBH
WERKZEUGFABRIK
Uphuser Heerstrasse 102
W-2807 Achim-Uphusen(DE)**

(72) Erfinder: **Kleine, Werner, Dipl.-Ing.
An der Marsch 29
W-2807 Achim(DE)**

(74) Vertreter: **Patentanwälte Phys. Bartels
Dipl.-Ing. Fink Dr.-Ing. Held
Lange Strasse 51
W-7000 Stuttgart 1(DE)**

**Beschreibung**

Die Erfindung betrifft einen Bohrer für Handbohrmaschinen nach dem Oberbegriff des Patentanspruches 1.

Die bekannten Handbohrmaschinen kann man in drei Gruppen unterteilen, und zwar in Bohhämmer, Schlagbohrmaschinen und einfache Bohrmaschinen, deren praktische Bedeutung in der angegebenen Reihenfolge abnimmt.

Unter einem Bohrhammer versteht man eine Bohrmaschine, bei der der Bohrer in einer Werkzeugaufnahme oder in einem Futter axial beweglich aber für eine Übertragung der Drehbewegung der Aufnahme bzw. des Futters auf den Bohrer formschlüssig gehalten ist. Im Bohrhammer ist ein auch Döpper genannter Schlagbolzen vorgesehen, der axial hin und her bewegt wird und dazu vorgesehen ist, auf das hintere Ende des Einspannschaftes des in der Aufnahme bzw. im Futter des Bohrhammers eingespannten Bohrers Schläge auszuüben.

Bei den handelsüblichen Bohrhämmern haben die Werkzeugaufnahmen aus diesem Grunde einen unveränderlichen Durchmesser, so daß die Bohrer für verschiedene Bohrungsdurchmesser immer einen Einspannschaft mit gleichem Durchmesser besitzen müssen, was die Herstellung der Bohrer sehr verteuert.

Für die formschlüssige Übertragung des Drehmomentes von der Werkzeugaufnahme oder vom Futter auf den Bohrer ist es bei diesen Bohrhämmern bekannt, im Einspannschaft des Bohrers sich axial erstreckende und an ihren Enden begrenzte Rillen vorzusehen, in die als Mitnahmen Rippen des Futters eingreifen, damit der Bohrer für die Übertragung der Schläge an die Bohrstelle in der Werkzeugaufnahme bzw. im Futter begrenzt axial beweglich gehalten ist und durch den Eingriff der Mitnahmen in die Rillen bei der Drehung des Futters formschlüssig mitgenommen wird.

Bei Schlagbohrmaschinen ist das Futter mit einer axial beweglichen Spindel verbunden, auf die während des Bohrens Schläge ausgeübt werden, so daß sich das Futter mit dem in ihm fest eingespannten Bohrer axial hin und her bewegt.

In den einfachen Bohrmaschinen wird dem Bohrer lediglich eine Drehbewegung erteilt, so daß der in der Bohrmaschine eingespannte und sich drehende Bohrer in die Bohrung hineingedrückt werden muß.

Anders als bei den Bohrhämmern haben die Schlagbohrmaschinen und die einfachen Bohrmaschinen Dreibackenfutter, bei denen die Futter an verschiedene Durchmesser von Einspannschäften angepaßt werden können, so daß bei den in diesen Maschinen verwendeten Bohrern die Druchmesser der zylindrischen Flächen des Bohrerschaftes und des Einspannschaftes im wesentlichen gleich groß sind.

Durch die EP-A-0 064 735 ist ein Bohrhammer bekannt, bei dem zum Einspannen der Bohrer auch ein Mehrbackenfutter, z.B. ein Dreibackenfutter, verwendet werden kann, so daß es möglich ist, auch bei diesen Bohrhämmern Bohrer zu verwenden, bei denen die Durchmesser des Bohrerschaftes und des Einspannschaftes im wesentlichen gleich groß sind.

Bei diesem bekannten Bohrhammer sind die Backen zur Bildung der Mitnahmen mit Rillen versehen, in die Rippen am Einspannschaft des Bohrers eingreifen. Diese Rillen müssen den Rippen des dicksten Einspannschaftes angepaßt, also verhältnismäßig breit sein. Da so breite Rippen bei den dünnen Bohrern nicht möglich sind, sind die dünnen Bohrer in diesem bekannten Mehrbackenfutter nicht einwandfrei geführt.

Der Erfindung liegt die Aufgabe zugrunde, einen Bohrer zu schaffen, der unabhängig von der Größe des Einspannschaftes in einem geeigneten Mehrbackenfutter einwandfrei geführt ist.

Diese Aufgabe ist gemäß der Erfindung durch die Merkmale des Patentanspruches 1 gelöst. Durch die bei allen Bohrern mit verschiedenen Durchmessern der Einspannschäfte gleichbleibenden und den Führungsflächen der Backen angepaßten Randbereiche der Rillen wird eine einwandfreie Führung aller erfindungsgemäß ausgebildeten Einspannschäfte im Mehrbackenfutter erreicht. Bilden die Führungsflächen der Backen und damit die Randbereiche der Rillen keine zur Achse des Einspannschaftes koaxiale Zylinderfläche, was bei zylindrischen Flächen nur für einen ganz bestimmten Durchmesser des Einspannschaftes möglich wäre, dann wird das Drehmoment des Futters auf den Bohrer auch von den nun Mitnahmen bildenden Führungsflächen der Backen formschlüssig auf die jetzt auch Gegenflächen bildende Randbereiche der Bohrer übertragen, so daß die Rippen der Backen entlastet werden.

Die Erfindung ermöglicht es also, die Rippe in der Backe des Mehrbackenfutters der Rille des dünnsten Bohrers anzupassen und bei allen übrigen Bohrern größeren Durchmessers die gleiche Rille zu verwenden, so daß die Einspannflächen der Backen des Mehrbackenfutters vollflächig an den Randbereichen der Einspannschäfte der Bohrers mit verschiedenen Durchmessern anliegen.

Gemäß der Erfindung können daher die Randbereiche der Rille der Einspannschäfte der Bohrer zylindrisch und zur Umfangsfläche der Einspannschäfte nicht koaxial oder auch eben sein.

Beim Ausformen der Rillen und Randbereiche am Einspannschaft können letztere wulstartige Überhöhungen bilden, durch die insbesondere bei dünnen Bohrern der Randbereich der Rille und damit die Gegenfläche vergrößert wird, ohne daß der Bohrerschaft z.B. durch eine zu tiefe Rille geschwächt wird.

Weitere Merkmale der Erfindung ergeben sich aus der folgenden Beschreibung von in der Zeichnung dargestellten Ausführungsbeispielen.

Es zeigen:

| Fig. 1 | eine Seitenansicht eines Ausführungsbeispiels eines Bohrers; |
| Fig. 2 | einen schematisch vereinfachten Schnitt einer bekannten Werkzeugaufnahme eines Bohrhammers mit eingespannten Bohrer; |
| Fig. 3 bis 5 | der Fig. 2 entsprechende Schnitte der Einspannschäfte von erfindungsgemäßen Bohrern verschiedenen Durchmessers mit an diesen angreifenden Backen ein und desselben Mehrbackenfutters. |

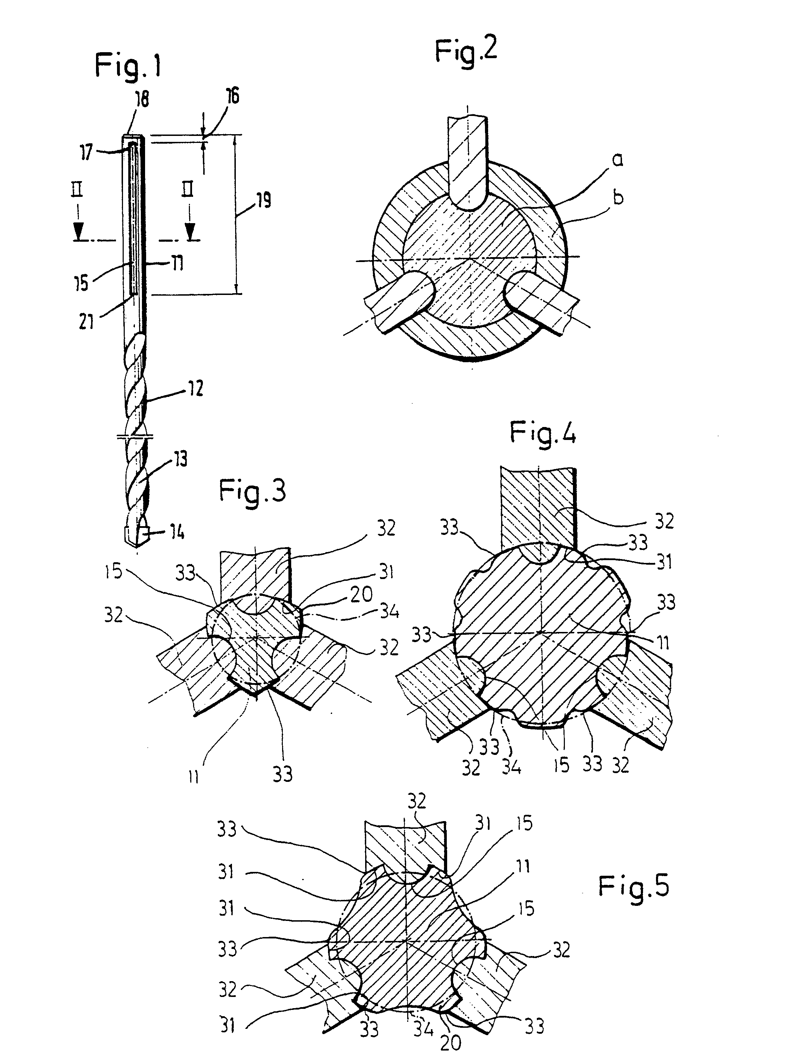

Der in Fig. 1 dargestellte Bohrer weist einen Einspannschaft 11 und einen Bohrerschaft 12 auf. Der Bohrerschaft 12 ist mit zwei Spanabführnuten 13 versehen und trägt an seinem vorderen Ende eine Schneidplatte 14.

Der Einspannschaft 11 ist, wie das aus den Fig. 3 bis 5 ersichtlich ist, mit drei achssymmetrisch angeordneten Rillen 15 versehen, die, wie das Fig. 1 zeigt, am vorderen und am hinteren Ende 21 bzw. 17 geschlossen sind.

Wie das aus Fig. 1 ersichtlich ist, besteht der dort dargestellte Bohrer aus einem Stück und ist aus einem vorzugsweise zylindrischen Rohling hergestellt. Im Falle spanlosen Einformens der Spanabführnuten 13 vergrößert sich etwas der Durchmesser des Bohrerschaftes 12 gegenüber dem Durchmesser des Einspannschaftes. Dadurch ergeben sich für Bohrer mit den in der folgenden Tabelle angegebenen Nenndurchmessern der zu bohrenden Bohrung die in dieser Tabelle angegebenen Durchmesserbereiche des Einspannschaftes:

| Nenndurchmesser der Bohrung mm | Durchmesserbereich des Einspannschaftes mm |
|---|---|
| 5 | 3,5 bis 5 |
| 6 | 4,5 bis 6 |
| 6,5 | 5,0 bis 6,5 |
| 7 | 5,3 bis 7 |
| 8 | 6,2 bis 8 |
| 10 | 7,7 bis 10 |
| 12 | 8,8 bis 12 |
| 13 | 9 bis 13 |
| 14 | 9,5 bis 14 |

Bei allen in der obigen Tabelle angeführten Bohrern beträgt der Abstand 16 des hinteren Endes 17 der Rille 15 von der hinteren Stirnfläche 18 höchstens 5 mm, vorzugsweise weniger als 3,5 mm. Der Abstand 19 des vorderen Endes 21 der Rille 15 von der hinteren Stirnfläche 18 beträgt bei allen Bohrern mindestens 40 mm, vorzugsweise mindestens 45 mm.

Wie das in den Fig. 3 und 5 dargestellt ist, kann die Oberfläche des Einspannschaftes 11 eine wulstartige Überhöhung 20 der zylindrischen Oberfläche 26 des Einspannschaftes 11 aufweisen. Diese Überhöhung 20 kann z.B. beim spanlosen Einformen der Rillen 15 aus dem beim Einformen verdrängten Material gebildet werden, so daß dadurch die beim Bohren den Bohrer auf Drehung mitnehmende Anlagefläche mit der jeweiligen Backe des Futters vergrößert wird. Dies ist bei dünnen Bohrern von besonderem Vorteil, da dadurch die den Mitnehmerschaft schwächende Rillentiefe verringert werden kann, ohne die Mitnahme des Bohrers zu beeinträchtigen.

In Fig. 2 ist gezeigt, daß bei den bekannten Bohrern mit für alle Bohrerdurchmesser gleichbleibendem Einspannschaft a die zylindrische Innenwand der Werkzeugaufnahme b eine flächige Führung für die Bohrer bildet.

Die Fig. 3, 4 und 5 zeigen, daß eine solche Führung durch eine beliebige, z. B. zylindrische Führungsflä-

3

EP 0 147 830 B1

che 31 an den Backen 32 eines Dreibackenfutters erreicht werden kann, wenn die an die Rillen 15 anschließenden Randbereiche 33 der Umfangsfläche der Einspannschäfte 11 eine von der zylindrischen Umfangsfläche 34 des Einspannschaftrohlings abweichenden, nämlich bei allen Bohrern gleichen, z. B. gleichzylindrischen Verlauf haben, der dem Verlauf der z. B. zylindrischen Führungsfläche 31 der Backen 32 angepaßt ist, deren Krümmungsradius sich bei den verschiedenen Einstellungen der Backen nicht ändert.

Bei den dargestellten Beispielen sind alle Rillen 15 an ihren vorderen und hinteren Enden 21 bzw. 18 geschlossen. Es genügt jedoch, wenn nur je eine Rille 15 am hinteren Ende geschlossen ist.

Bei einem weiteren nicht dargestellten Ausführungsbeispiel können die Rillen 15 einzeln oder alle bis zur Spanabführnut 13 durchgeführt sein.

Grundsätzlich soll die Rillenform nach Möglichkeit der Form der Backen des Futters der Bohrmaschinen angepaßt werden, so daß eine Flächenberührung zwischen den Backen und den Rillenwänden gewährleistet ist. Gegebenenfalls kann die Rillenwand im Querschnitt kreisförmig gebogen sein. Auch können z.B. die äußeren Ränder 22 der Rillenflanken einer Rille miteinander einen Winkel bilden, der verschieden von 120° und z.B. nur etwa 90° beträgt.

**Ansprüche**

1. Bohrer für Handbohrmaschinen mit einem Einspannschaft (11) für das Einspannen des Bohrers in ein Mehrbackenfutter, dessen radial an den Einspannschaft andrückbare Backen (32) für die Anlage an der Umfangsfläche des Einspannschaftes Führungsflächen (31) aufweisen, die für einen Eingriff mit Gegenflächen am Einspannschaft mit einer Mitnahme versehen sind, dadurch gekennzeichnet, daß zur Bildung der Gegenflächen am Einspannschaft (11) eine Rille (15) für den Eingriff der als Rippe ausgebildeten Mitnahme vorgesehen ist und daß mindestens je ein Randbereich (33) der Umfangsfläche des Einspannschaftes (11), der sich an die Rille (15) anschließt, einen Verlauf hat, der an die entsprechende Führungsfläche (31) der Backen (32) angepaßt ist, die beim Einspannen von Einspannschäften (11) mit verschiedenen Durchmessern einen immer gleichbleibenden Verlauf hat.

2. Bohrer nach Anspruch 1, dadurch gekennzeichnet, daß mindestens der beim Bohren voreilende Randbereich (33) eine wulstartige Überhöhung (20) bildet, die die Rillenflanken im wesentlichen fortsetzt und über die übrige Oberfläche des Einspannschaftes ragt.

3. Bohrer nach Anspruch 1 oder 2, dadurch gekennzeichnet, daß der Randbereich (33) zylindrisch und zur Umfangsfläche des Einspannschaftes (11) nicht koaxial ist.

4. Bohrer nach einem der Ansprüche 1 bis 3, dadurch gekennzeichnet, daß der Randbereich (33) eben ist.

5. Bohrer nach einem der Ansprüche 1 bis 4, dadurch gekennzeichnet, daß die zu beiden Seiten einer Rille (15) liegenden Randbereiche (33) gleich ausgebildet sind.

**Claims**

1. Drill bit for hand-held drilling machines with a clamping shaft (11) for clamping the drill bit in a multiple jaw chuck, of which the jaws (32), which can be pressed radially against the clamping shaft, comprise guide surfaces (31) for abutment against the peripheral surface of the clamping shaft, these guide surfaces being provided with entrainment means for engaging with opposite surfaces on the clamping shaft, characterised in that in order to form the opposite surfaces on the clamping shaft a groove (15) is provided for engaging with the rib-shaped entrainment means, and in that in each case at least one edge area (33) of the peripheral surface of the clamping shaft (11), which is connected to the groove (15), extends in a manner which is adapted to the corresponding guide surface (31) of the jaws (32) which always extend in the same manner when clamping shafts (11) with varying diameters are clamped in.

2. Drill bit according to claim 1, characterised in that at least the edge area (33) which leads during drilling forms a bead-like elevation (20), which is essentially an extension of the groove sides and projects above the remaining surface of the drill bit.

3. Drill bit according to claim 1 or 2, characterised in that the edge area (33) is cylindrical and is not

4

coaxial to the peripheral surface of the clamping shaft (11).

4. Drill bit according to one of claims 1 to 3, characterised in that the edge area (33) is flat.

5. Drill bit according to one of claims 1 to 4, characterised in that the edge areas (33) on either side of a groove (15) are formed in an identical manner.

**Revendications**

1. Foret pour perceuses portatives présentant un fût de serrage (11) pour le serrage du foret dans un mandrin à plusieurs mors, dont les mors (32), qui peuvent s'appuyer radialement contre le fût de serrage, présentent, pour l'appui contre la surface périphérique du fût de serrage, des surfaces de guidage (31) qui, pour venir en prise avec des contre-surfaces prévues sur le fût de serrage, comportent un moyen d'entrainement, foret caractérisé par le fait que pour la formation des contre-surfaces sur le fût de serrage (11) est prévue une rainure (15) pour venir en prise avec le moyen d'entrainement conçu sous forme de nervure et par le fait qu'au moins une zone respective de bordure (33) qui fait partie de la surface périphérique du fût de serrage (11) et qui se raccorde à la rainure (15) a une allure qui est adaptée à la surface de guidage correspondante (31) des mors (32) qui, pour le serrage de fûts de serrage (11) de diamètre différent, a une allure toujours identique.

2. Foret selon la revendication 1, caractérisé par le fait qu'au moins la zone de bordure (33) qui est en avant lors du perçage forme une surélévation (20) du type bourrelet qui prolonge sensiblement les flancs de rainure et dépasse du reste de la surface du fût de serrage.

3. Foret selon la revendication 1 ou 2, caractérisé par le fait que la zone de bordure (33) est cylindrique et n'est pas coaxiale à la surface périphérique du fut de serrage (11).

4. Foret selon l'une des revendications 1 à 3, caractérisé par le fait que la zone de bordure (33) est affleurante.

5. Foret selon l'une des revendications 1 à 4, caractérisé par le fait que les zones de bordure (33) situées des deux côtés d'une rainure (15) sont de forme identique.

# Fig.1

# Fig.2

# Fig.3

# Fig.4

# Fig.5